# EUROPEAN PATENT SPECIFICATION

(11) **EP 1 749 430 B1**
(45) Date of publication and mention of the grant of the patent: **10.09.2008**
(21) Application number: 06118279.6
(22) Date of filing: 01.08.2006
(51) Int. Cl.: A01D 34/68, F16D 65/14

(54) **Improvements in or relating to braking systems**
Verbesserungen bei Bremssystemen
Améliorations à des systèmes de freinage

(30) Priority: 02.08.2005 GB 0515840
(43) Date of publication of application: 07.02.2007
(73) Proprietor: ROBERT BOSCH GMBH, 70469 Stuttgart (DE)
(72) Inventor: Quigley, Andrew, Stowmarket, Suffolk IP14 1EY (GB); Coussins, Adrian, Stowmarket, Suffolk IP14 1EY (GB)
(74) Representative: Bailey, David Martin

(56) References cited:
- FR-A- 2 298 265
- GB-A- 699 810
- US-A- 4 295 327
- US-A- 4 696 381
- US-A- 5 768 786

## Description

The invention relates to improvements in or relating to braking systems, in particular to an apparatus for reducing the stopping time of a moving body in a gardening machine, for example, the rotary blade of a rotary lawnmower. The present invention also relates to a gardening machine having such an apparatus, more specifically to a lawncare machine such as lawnmowers.

In gardening machines having driven components, such as a cutting blade, the components continue to move for a period of time after the driving force, such as an electric motor, is removed. The period of time between turning off the motor and when the moving component comes to a halt is referred to herein as the stopping time of the component and can be very substantial. In machines having sharp or pointed components accessible to users, for example the blades of lawnmowers or the tines of scarifiers, it is necessary for the purposes of safety to limit the stopping time of these potentially hazardous components.

In known systems (see e.g. US-A-4295327) for reducing the stopping time of components in gardening machines, there are provided braking mechanisms which are held in an off position while the machine components are being driven and which automatically engage to brake the moving components when the driving force is cut off. Such systems require to actuate the brake between an on and an off position. These mechanisms are often complex typically comprised of a plurality of moving parts. The costs of production are high.

In its broadest sense, the present invention provides an apparatus for reducing the stopping time of a moveable body in a gardening machine, the apparatus comprising a brake acting permanently upon a component of the drive mechanism of the moveable body.

In particular, the present invention provides an apparatus comprising an electric motor driving a driven shaft by means of an indirect drive assembly. The apparatus comprises a brake system in which a brake element is in substantially permanent contact with a component of the indirect drive assembly.

Preferably, the brake element is in a substantially permanent rubbing contact with the component of the drive assembly. Preferably, the brake element reduces the stop time of the moveable body to less than 3 seconds.

Preferably, the brake system comprises an annular brake disc and the brake element comprises a brake pad biased into contact with the brake disc.

Suitably, the brake pad is biased by means of a spring into contact with the brake disc.

Suitably, the spring is a compression spring. Alternatively, the spring is a leaf, torsion or cantilever spring.

Suitably, the indirect drive assembly comprises a belt drive assembly in which a belt is driven by the motor over a pulley to which, in use, the moveable body is axially coupled.

Preferably, the electric motor has a drive shaft upon which is mounted a fan or impeller, the fan causing, in use, a flow of air to pass through the motor to cool the motor.

In a preferred embodiment, the electric motor and indirect drive assembly are mounted within a drive assembly housing. The annular brake disc is mounted on the pulley and the brake element is mounted within the housing.

In an alternative embodiment, the annular brake disc is mounted on a motor housing component and the brake pad is mounted within the pulley.

In a yet further alternative embodiment, the brake disc is mounted on a brake disc support element carried by the drive shaft of the electric motor. The brake pad is mounted within the housing. Suitably, the brake disc support element is formed integrally with the fan or impeller of the motor.

In a further aspect, the present invention also provides a lawncare apparatus comprising the apparatus described above. In particular, it provides a lawnmower in which a cutting element is mounted on the driven shaft. Preferably, the lawnmower is of the rotary type in which the driven shaft rotates about a vertical axis.

The above and other aspects of the present invention will now be described by way of example only and with reference to the accompanying drawings in which:
Figure 1 is a perspective view of a drive portion of an embodiment of a braking system of a lawncare apparatus in accordance with the present invention shown in exploded form;
Figure 2 is a section view corresponding to the line II-II in Figure 1 showing the braking system assembled; and
Figures 3 and 4 show schematically alternative brake pad biasing arrangements.

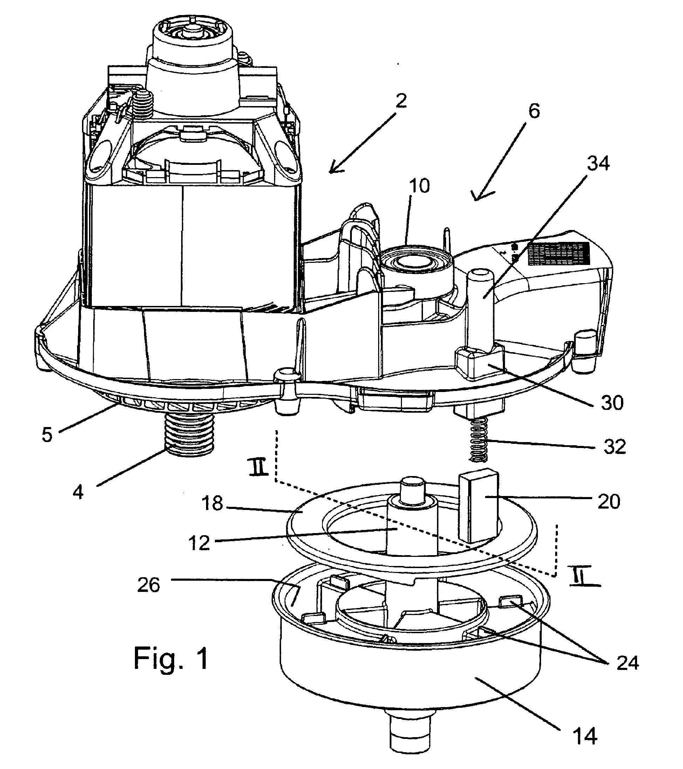

The apparatus shown in Figure 1 comprises a motor housing 2 having a motor assembled therein. A rotating drive shaft 4 extends from the motor through the motor housing 2. A rotary fan or impeller 5 is mounted on the drive shaft 4 and acts to draw air through the motor 2 to cool the motor. The air flow is then directed over the brake components before discharge to atmosphere.

A spindle-mounting portion 6 is provided and is attached or integrally formed with the motor housing 2. A bearing 8 is provided in bearing seat 10 on the spindle-mounting portion 6.

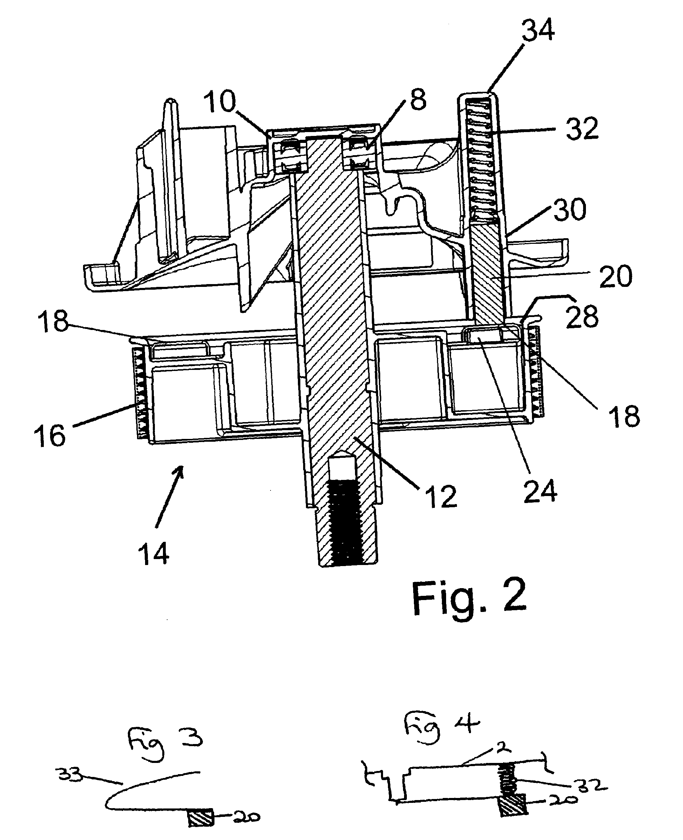

A spindle 12 is mounted for rotation on bearing 8. A drum or pulley 14 is mounted in rotationally fixed relationship on spindle 12. In use and as illustrated in Figure 2, the spindle 12 is mounted into the bearing 8 and the drum is held in a position adjacent the drive shaft 4 so that a drive-belt 16 can be fitted over the drive shaft 4 and the drum 14 to transfer rotary drive from the shaft 4 to the drum or pulley 14 and hence to cause rotation of the spindle 12. A rotary blade of a lawn mower (not shown) would typically be attached to a lower end of the spindle 12.

A braking mechanism is provided which acts to reduce the natural stopping time of the spindle and the components mounted thereon. This natural stopping time is typically about 3½ seconds for an indirect drive system as described. The effect of the additional inventive braking system is to reduce this to below 3 seconds. The braking mechanism comprises a brake disc 18, a brake pad 20, and biasing means, in the form of a coil spring 32, to bias the brake pad 20 into permanent rubbing contact with the brake disc 18.

Braking systems are, of course, well known in which a brake pad acts on a brake disc continuously throughout a braking procedure by means, for example, of a spring biasing arrangement. However, conventionally, the biasing is disapplied during normal operation of the motor or engine, for example, by means of a Bowden cable or electromagnetic release mechanism.

The brake disc 18 is suitably constructed from pressed steel. It is preferably lightweight in order to keep its inertia when spinning to a minimum. The illustrated brake disc 18 is in the form of an annular brake surface with depending sidewalls or flanges giving a substantially inverted U-shaped cross-section. The surface which contacts the brake pad 20 is flat in order to achieve a good permanent contact between the brake disc 18 and the brake pad 20. A non-flat surface on the brake disc 18 can lead to reduction of loss of contact between the disc 18 and the pad 20 resulting in loss of braking and undesirable vibrations.

The brake disc 18 is mounted on lugs 24 provided on the drum 14. The lugs 24 are substantially rectangular in shape and are adapted to fit into the U of the cross-section of the brake disc 18 contacting the underside of the annular brake disc. The lugs 24 act to locate the brake disc on the drum and also support the upper wall of the brake disc 18 to help prevent indentation of the contact surface due to pressure from the brake pad 20. The lugs 24 preferably have a height greater than the height of the sidewalls of the brake disc 18 when the flanges are symmetrical. This allows for variation in the height of the flanges of the brake disc 18, which may, for example, result from inaccuracies during manufacture when the brake disc 18 is pressed into the desired cross section. By supporting the disc 18 only under the annular brake disc surface, accurate flat location of disc 18 is ensured, any inconsistencies from the manufacturing process manifesting themselves harmlessly in the flanges.

The flanges are also provided with suitable locally raised tabs (not shown) to provide positive torsional location in the pulley moulding.

The upper edges of the brake disc are bevelled so as to accept and be retained by resilient protrusions 28 extending inwardly from the sidewall 26 of the drum. The protrusions 28 form a snap-fitting mechanism for holding the brake disc 18 on the drum 14 as shown in Figure 2.

The brake pad 20 preferably comprises a low wear material having a high friction coefficient. It is preferable to make use of a low wear material because the pad 20 is in permanent contact with the brake disc 18 and is permanently being worn away. To avoid the need to replace the pad or to reduce the frequency of replacements a low wear material is required. In the illustrated embodiment a wear of approximately 5mm over the expected lifetime of the lawncare machine is acceptable. Those skilled in the art of brake material design will be readily able to select appropriate materials.

The illustrated brake pad 20 has a substantially rectangular solid shape. It is orientated with its lower end face to contact the brake disc 18 and the length of its body to be housed in a housing 30. The brake disc is preferably long enough so that when it is received into the housing 30 enough of the body of the pad 20 is held to prevent significant tilting of the pad throughout the life of the machine.

The housing 30 acts to hold the brake pad in fixed rotational relation to the spindle-mounting portion 6. In an alternative embodiment the brake pad 20 may be mounted on a pivoting lever fixed in rotational relation to the spindle mounting portion 6.

As illustrated in Figures 1 and 2, the brake pad 20 is continually biased into contact with the brake disc 18 by a coil spring 32 thereby continuously dissipating energy during use of motor. It will be clear to those skilled in the art that other means for biasing the brake pad 20 could be used. In an alternative embodiment the brake pad may be mounted on a leaf or cantilever spring 33 (Figure 3). In a yet further embodiment (Figure 4), brake pad 20 is mounted towards one end of a resilient strip 35, the other end of which strip 35 is mounted conveniently on the housing 2. A spring 32 acts between the housing and the strip at the spring point to provide the desired biasing against the brake disc. In an alternative further embodiment (not shown), the coil spring 32 is replaced by a constant force spring or a torsion spring.

A spring housing 34 extends from the brake pad housing 30. The spring 32 is placed in spring housing 34, followed by the brake pad 20 into brake pad housing 30 thereby compressing the spring 32. The cavity in the spring housing 34 is suitably approximately equal in overall length to length of the spring 32 when fully compressed.

The brake pad 20 is biased with a force sufficient to cause continuous rubbing of the pad on the brake disc to reduce the natural stopping time of the moving component but is low enough to allow the component to be driven while the brake is applied. The brake pad therefore acts as a permanently rubbing brake. The brake pad is preferably biased into contact with the brake disc with enough force to reduce the stopping time to less than 3 seconds.

As the brake pad 20 is worn away its length decreases and the spring 32 extends. The spring 32 preferably has a soft rate to minimise the change in force exerted by the spring as it extends over the lifetime of the brake.

In trials, it has been determined that suitable braking can be achieved with a spring that provides a force of between 10N and 25N for the brake pad acting at a radius of 40 mm against the brake disc, preferably around 17N to 18N when new and between 14N to 15N of force when the brake pad has been worn by 5mm and consequently the spring has extended by 5mm.

These values are equivalent to a constant additional braking torque at the blade of 0.1 Nm to 0.3 Nm. This torque is applied to the blade whether the drive is switched on or off with the size of the brake area being selected to dissipate this without excessive temperature rise. These figures equate to a continuous power dissipation by the continuously rubbing brake of 38W to 113W. The preferred values of 17N to 18N force equates to a power dissipation of up to 75W.

As illustrated in Figure 1, an impeller or rotary fan 5 is provided to draw air through the motor housing 2 to cool the motor. The outflow of the fan is preferably directed over the brake disc 18 and or the brake pad 20. The flow of air acts to remove debris from the braking components and preferably acts to cool the braking components.

In an alternative embodiment (not shown), the brake disc 18 is mounted on the motor housing 2 and the brake pad 20 is mounted on the spindle.

In a yet further alternative embodiment, the brake disc 18 is biased into contact with the brake pad 20, instead of or as well as the brake pad 20 being biased into contact with the brake disc.

The illustrated drive apparatus is adapted to be mounted on a lawnmover chassis. However, such a drive apparatus could be used for a variety of gardening machines, more specifically lawncare machines, and although it is herein broadly described with reference to a lawnmower the invention is not restricted to use with lawnmowers.

## Claims

1. An apparatus for reducing the stopping time of a moveable body in a gardening machine, the apparatus comprising a brake acting permanently upon a component of the drive mechanism of the moveable body.

2. An apparatus as claimed in Claim 1 wherein the brake element is in a substantially permanent rubbing contact with the component of the drive mechanism.

3. An apparatus as claimed in Claim 1 or Claim 2 comprising an electric motor driving a driven shaft by means of an indirect drive assembly further comprising a brake system in which a brake element is in substantially permanent contact with a component of the indirect drive assembly.

4. An apparatus as claimed in Claim 3, wherein the brake system comprises an annular brake disc (18) and the brake element comprises a brake pad (20) biased into contact with the brake disc.

5. An apparatus as claimed in Claim 4, wherein the brake pad is biased by means of a spring (32) into contact with the brake disc.

6. An apparatus as claimed in Claim 5 wherein the spring is a compression spring, a leaf spring, a torsion spring or a cantilever spring (33).

7. An apparatus as claimed in any one of Claims 3 to 6 wherein the indirect drive assembly comprises a belt drive assembly in which a belt (16) is driven by the motor over a pulley to which, in use, the moveable body is axially coupled.

8. An apparatus as claimed in any one of Claims 3 to 7 wherein the electric motor and indirect drive assembly are mounted within a drive assembly housing.

9. An apparatus as claimed in Claim 8 when dependent upon Claim 7 wherein the annular brake disc (18) is mounted on the pulley and the brake element is mounted within the housing.

10. An apparatus as claimed in Claim 8 when dependent upon Claim 7 wherein the annular brake disc is mounted on a motor housing component and the brake pad is mounted within the pulley.

11. An apparatus as claimed in any one of Claims 3 to 10 wherein the electric motor has a drive shaft (4) upon which is mounted a fan or impeller (5); the fan causing, in use, a flow of air to pass through the motor to cool the motor.

12. An apparatus as claimed in Claim 8 when dependent upon Claim 7 wherein the brake disc (18) is mounted on a brake disc support element carried by the drive shaft of the electric motor and the brake pad is mounted within the housing.

13. An apparatus as claimed in Claim 12 wherein the electric motor has a drive shaft (4) upon which is mounted a fan or impeller (5), the fan causing, in use, a flow of air to pass through the motor to cool the motor and wherein the brake disc support element is formed integrally with the fan or impeller of the motor.

14. An apparatus as claimed in any one of claims 2 to 13 in which the brake element reduces the stop time of the moveable body to less than 3 seconds.

15. A lawncare apparatus comprising an apparatus as claimed in any one of Claims 1 to 14.

16. An apparatus as claimed in Claim 15 in the form of a lawnmower in which a cutting element is mounted on the driven shaft.

17. An apparatus as claimed in Claim 16 wherein the lawnmower is of the rotary type in which the driven shaft rotates about a vertical axis.

## Patentansprüche

1. Vorrichtung zum Verringern der Bremszeit eines beweglichen Körpers in einer Gartenbaumaschine, wobei die Vorrichtung eine Bremse umfasst, die dauerhaft auf eine Komponente des Antriebsmechanismus des beweglichen Körpers wirkt.

2. Vorrichtung nach Anspruch 1, worein dass das Bremselement in einem im Wesentlichen dauerhaften Reibungskontakt mit der Komponente des Antriebsmechanismus ist.

3. Vorrichtung nach Anspruch 1 oder Anspruch 2, worein dass die Vorrichtung einen Elektromotor umfasst, der mittels eines Aggregats für den indirekten Antrieb eine Abtriebswelle antreibt, wobei sie ferner ein Bremssystem umfasst, in dem ein Bremselement im Wesentlichen in dauerhaftem Kontakt mit einer Komponente des Aggregats für den indirekten Antrieb ist.

4. Vorrichtung nach Anspruch 3, worein dass das Bremssystem eine ringförmige Bremsscheibe (18) umfasst und das Bremselement einen Bremsbelag (20) umfasst, der in Kontakt mit der Bremsscheibe vorbelastet ist.

5. Vorrichtung nach Anspruch 4, worein dass der Bremsbelag mittels einer Feder (32) in Kontakt mit der Bremsscheibe vorbelastet ist.

6. Vorrichtung nach Anspruch 5, worein dass die Feder eine Druckfeder, eine Blattfeder, eine Torsionsfeder oder eine Auslegerfeder (33) ist.

7. Vorrichtung nach einem der Ansprüche 3 bis 6, worein dass das Aggregat für den indirekten Antrieb eine Riementrieb-Baueinheit umfasst, in der ein Riemen (16) durch den Motor über eine Riemenscheibe angetrieben wird, mit der der bewegliche Körper in Verwendung axial gekoppelt ist.

8. Vorrichtung nach einem der Ansprüche 3 bis 7, worein dass der Elektromotor und das Aggregat für den indirekten Antrieb in ein Antriebsaggregatgehäuse eingebaut sind.

9. Vorrichtung nach Anspruch 8, wenn abhängig von Anspruch 7, worein dass die ringförmige Bremsscheibe (18) an der Riemenscheibe angebracht ist und das Bremselement in das Gehäuse eingebaut ist.

10. Vorrichtung nach Anspruch 8, wenn abhängig von Anspruch 7, worein dass die ringförmige Bremsscheibe an einer Motorgehäusekomponente angebracht ist und der Bremsbelag in die Riemenscheibe eingebaut ist.

11. Vorrichtung nach einem der Ansprüche 3 bis 10, worein dass der Elektromotor eine Antriebswelle (4) aufweist, an der ein Lüfter oder Flügelrad (5) angebracht ist; wobei der Lüfter in Verwendung veranlasst, dass ein Luftstrom durch den Motor geht, um den Motor zu kühlen.

12. Vorrichtung nach Anspruch 8, wenn abhängig von Anspruch 7, worein dass die Bremsscheibe (18) an einem Bremsscheibentragelement angebracht ist, das von der Antriebswelle des Elektromotors getragen ist, und bei der der Bremsbelag in das Gehäuse eingebaut ist.

13. Vorrichtung nach Anspruch 12, worein dass der Elektromotor eine Antriebswelle (4) aufweist, an der ein Lüfter oder Flügelrad (5) angebracht ist; wobei der Lüfter in Verwendung veranlasst, dass ein Luftstrom durch den Motor geht, um den Motor zu kühlen, und wobei das Bremsscheibentragelement einteilig mit dem Lüfter oder Flügelrad des Motors gebildet ist.

14. Vorrichtung nach einem der Ansprüche 2 bis 13, worein dass das Bremselement die Bremszeit des beweglichen Körpers auf weniger als 3 Sekunden verringert.

15. Rasenpflegevorrichtung, die eine Vorrichtung umfasst, wie sie nach einem der Ansprüche 1 bis 14 beansprucht ist.

16. Vorrichtung nach Anspruch 15 in Form eines Rasenmähers, in dem an der Abtriebswelle ein Schneidelement angebracht ist.

17. Vorrichtung nach Anspruch 16, bei der der Rasenmäher vom Drehtyp ist, in dem sich die Abtriebswelle um eine vertikale Achse dreht.

## Revendications

1. Appareil destiné à réduire le temps d'arrêt d'un corps mobile dans une machine de jardinage, l'appareil comprenant un frein agissant en permanence sur un composant du mécanisme d'entraînement du corps mobile.

2. Appareil selon la revendication 1 dans lequel l'élément de frein est en contact de frottement sensiblement permanent avec le composant du mécanisme d'entraînement.

3. Appareil selon la revendication 1 ou la revendication 2 comprenant un moteur électrique entraînant un arbre entraîné au moyen d'un ensemble d'entraînement indirect comprenant en outre un système de frein dans lequel un élément de frein est en contact sensiblement permanent avec un composant de l'ensemble d'entraînement indirect.

4. Appareil selon la revendication 3, dans lequel le système de frein comprend un disque de frein annulaire (18) et l'élément de frein comprend une plaquette de frein (20) sollicitée en contact avec le disque de frein.

5. Appareil selon la revendication 4, dans lequel la plaquette de frein est sollicitée au moyen d'un ressort (32) en contact avec le disque de frein.

6. Appareil selon la revendication 5 dans lequel le ressort est un ressort de compression, un ressort à lames, un ressort de torsion ou un ressort en porte-à-faux (33).

7. Appareil selon l'une quelconque des revendications 3 à 6 dans lequel l'ensemble d'entraînement indirect comprend un ensemble de courroie d'entraînement dans lequel une courroie (16) est entraînée par le moteur au-dessus d'une poulie à laquelle, au cours d'une utilisation, le corps mobile est couplé axialement.

8. Appareil selon l'une quelconque des revendications 3 à 7 dans lequel le moteur électrique et l'ensemble d'entraînement indirect sont montés à l'intérieur d'un boîtier d'ensemble d'entraînement.

9. Appareil selon la revendication 8 lorsqu'elle dépend de la revendication 7 dans lequel le disque de frein annulaire (18) est monté sur la poulie et l'élément de frein est monté à l'intérieur du boîtier.

10. Appareil selon la revendication 8 lorsqu'elle dépend de la revendication 7 dans lequel le disque de frein annulaire est monté sur un composant de boîtier de moteur et la plaquette de frein est montée à l'intérieur de la poulie.

11. Appareil selon l'une quelconque des revendications 3 à 10 dans lequel le moteur électrique présente un arbre d'entraînement (4) sur lequel est monté(e) un ventilateur ou une hélice (5), le ventilateur faisant passer, au cours d'une utilisation, un flux d'air à travers le moteur pour refroidir le moteur.

12. Appareil selon la revendication 8 lorsqu'elle dépend de la revendication 7 dans lequel le disque de frein (18) est monté sur un élément de support de disque de frein porté par l'arbre d'entraînement du moteur électrique et la plaquette de frein est montée à l'intérieur du boîtier.

13. Appareil selon la revendication 12 dans lequel le moteur électrique présente un arbre d'entraînement (4) sur lequel est monté un ventilateur ou une hélice (5), le ventilateur faisant passer, au cours d'une utilisation, un flux d'air à travers le moteur pour refroidir le moteur et dans lequel l'élément de support de disque de frein est formé de manière solidaire avec le ventilateur ou l'hélice du moteur.

14. Appareil selon l'une quelconque des revendications 2 à 13 dans lequel l'élément de frein réduit le temps d'arrêt du corps mobile à moins de 3 secondes.

15. Appareil d'entretien du gazon selon l'une quelconque des revendications 1 à 14.

16. Appareil selon la revendication 15 sous forme d'une tondeuse à gazon dans lequel un élément de coupe est monté sur l'arbre d'entraînement.

17. Appareil selon la revendication 16 dans lequel la tondeuse à gazon est du type rotatif dans lequel l'arbre d'entraînement tourne autour d'un arbre vertical.
